(19) Europäisches Patentamt
European Patent Office
Office européen des brevets

(11) EP 3 767 872 A1

(12) # DEMANDE DE BREVET EUROPEEN

(43) Date de publication:
**20.01.2021 Bulletin 2021/03**

(51) Int Cl.:
***H04L 9/08*** *(2006.01)* ***H04L 9/30*** *(2006.01)*

(21) Numéro de dépôt: **20184981.7**

(22) Date de dépôt: **09.07.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.07.2019 FR 1908156**

(71) Demandeur: **IN-IDT**
**75016 Paris (FR)**

(72) Inventeurs:
- **MALBOROUGT, Jean-Noël**
**91160 BALLAINVILLIERS (FR)**
- **KHEMIRI, Houssemeddine**
**78140 VELIZY-VILLACOUBLAY (FR)**
- **LAMBLIN, Thibaut**
**75016 PARIS (FR)**

(74) Mandataire: **Marks & Clerk France**
**Immeuble "Visium"**
**22, avenue Aristide Briand**
**94117 Arcueil Cedex (FR)**

(54) **PROCEDE DE GENERATION DE CLE PRIVEE A PARTIR DE CARACTERISTIQUES BIOMETRIQUES**

(57) L'invention concerne un procédé et un dispositif pour générer une ou plusieurs clés de chiffrement caractérisé en ce qu'il comporte au moins les étapes suivantes :
- extraire (21) un ensemble de paramètres vocaux d'un flux audio propre à un individu et sélectionner un nombre N de paramètres vocaux par tirage aléatoire (22),
- extraire (23) un ensemble de N paramètres visuels d'un flux vidéo,
- combiner (24) les N paramètres visuels et les N paramètres vocaux issus du tirage aléatoire et générer une matrice A de taille NxN,
- effectuer (25) une binarisation d'un ensemble de composantes de la matrice A afin de générer un vecteur binaire de taille T,
- ajouter deux bits de valeur x au début et à la fin du vecteur binaire afin d'obtenir un nombre impair,
- convertir le vecteur en nombre, vérifier si le nombre est un nombre premier, (27),
- si le nombre n'est pas un nombre premier, ajouter un nombre « y » afin d'obtenir le nombre impair suivant,
- réitérer les étapes d'ajout de la valeur « y » jusqu'à obtenir un nombre premier, (28),
- à partir d'au moins ledit nombre premier trouvé, générer une clé de chiffrement Kp.

[Fig. 2]

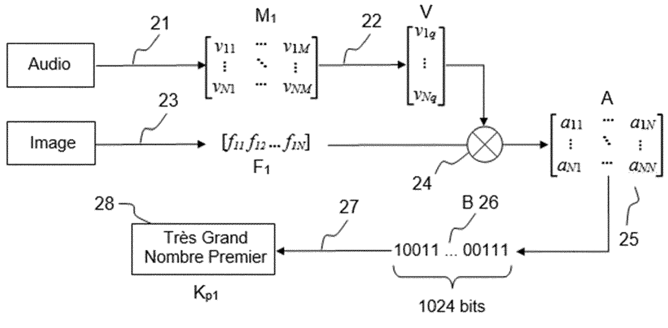


EP 3 767 872 A1

## Description

L'invention concerne un procédé et un système pour générer une clé utilisée pour le chiffrement de données. La clé est par exemple utilisée comme clé privée pour le chiffrement de données dans un système asymétrique. Elle trouve son application dans le domaine des communications, pour sécuriser les transmissions de données, pour sécuriser les paiements en ligne, ou encore dans le domaine de l'identification pour authentifier des données ou un document.

De nombreuses utilisations font appel au chiffrement de données, par exemple pour sécuriser la transmission de données dans des systèmes de communication, pour des transactions bancaires ou dans des dispositifs d'identification.

L'art antérieur divulgue de nombreuses techniques de chiffrement de données. La cryptographie asymétrique utilise, par exemple, un chiffrement à clé publique et à clé privée. L'un des objectifs est de garantir la confidentialité d'une donnée. Dans la cryptographie asymétrique, on utilise deux clés de chiffrement. L'utilisateur utilise une première clé de chiffrement, afin que les tiers qui ne possèdent pas la deuxième clé ne puissent accéder aux données chiffrées de l'utilisateur.

Le brevet US 10050784 divulgue un système et un procédé permettant de générer une clé cryptographique à l'aide d'une séquence de segments de données sélectionnés par un utilisateur parmi une ou plusieurs ressources de données. Les données brutes provenant de la ou des ressources de données correspondant à chacun des segments de données sélectionnés, ainsi que la séquence dans laquelle ces segments de données sont sélectionnés, sont extraites et traitées pour générer une clé. La clé peut être utilisée à des fins d'authentification et de cryptographie. Cette technique améliore la sécurité tout en facilitant la création et l'utilisation d'une telle sécurité.

Le document de Mofeed Turky Rashid et al, intitulé « RSA Cryptographic Key Generation Using Fingerprint Minutia », XP055673658 et le document de Sarkar Arpita et al, intitulé « RSA Key Generation from Cancelable Fingerprint Biometrics, 2017 International Conférence on computing, communication, control and automation, IEEE, XP0033402710, divulguent une méthode de génération de clés asymétriques qui utilise le tirage aléatoire d'une clé pour faire le « salting » et le « shiffling » d'une empreinte. L'empreinte est une biométrie statique qui est identique pour chaque acquisition.

Dans les systèmes décrits dans l'art antérieur la clé est générée à partir d'un flux d'images ou clip vidéo proposé d'une façon aléatoire à partir d'une base de données de ressources.

L'expression « points d'intérêts » utilisée dans la suite est une expression connue dans le domaine de la biométrie qui caractérise un paramètre du visage ou d'une voix d'un individu.

Le procédé de génération d'une clé de chiffrement selon l'invention exploite un ensemble de paramètres biométriques propres à un individu, issus d'un flux audio et d'un flux vidéo.

L'invention concerne un procédé pour générer une ou plusieurs clés de chiffrement caractérisé en ce qu'il comporte au moins les étapes suivantes :

- extraire un ensemble de paramètres vocaux d'un flux audio propre à un individu et sélectionner un nombre N de paramètres vocaux par tirage aléatoire,
- extraire un ensemble de N paramètres visuels d'une image d'un flux vidéo,
- combiner les N paramètres visuels et les N paramètres vocaux issus du tirage aléatoire et générer une matrice A de taille NxN,
- effectuer une binarisation d'un ensemble de composantes de la matrice A afin de générer un vecteur binaire de taille T,
- ajouter au moins deux bits de valeur x au début et à la fin du vecteur binaire afin d'obtenir un nombre impair,
- convertir le vecteur en nombre et vérifier si le nombre est un nombre premier,
- si le nombre n'est pas un nombre premier, ajouter un nombre « y » afin d'obtenir le nombre impair suivant,
- réitérer les étapes d'ajout de la valeur « y » jusqu'à obtenir un nombre premier,
- à partir d'au moins ledit nombre premier trouvé, générer au moins une clé de chiffrement Kp.

Selon un mode de réalisation, on va générer au moins deux nombres premiers pour générer un couple clé publique/clé privée $K_{P1}$, $K_P$, pour des usages de chiffrement asymétrique.

Pour vérifier qu'un nombre est un nombre premier, le procédé utilise le test Miller-Rabin.

Selon un mode de réalisation, on utilise les valeurs x=1 et y=2.

Le procédé peut utiliser comme paramètres vocaux des coefficients cepstraux.

Pour extraire un ensemble de paramètres vocaux, le procédé va par exemple exécuter les étapes suivantes :

- découper le signal de parole en plusieurs segments et pondérer chaque segment par une fenêtre de Hamming,
- appliquer une transformée de Fourrier rapide à chaque segment pondéré,
- filtrer les segments transformés,

- appliquer une transformation en cosinus discrète pour obtenir les coefficients cepstraux MFCC.

On peut utiliser comme paramètres visuels des paramètres obtenus par la technique de transformée en cosinus discrète.

L'invention concerne aussi un dispositif pour générer une ou plusieurs clés cryptographiques caractérisé en ce qu'il comporte au moins les éléments suivants :

- un capteur adapté à capturer un ensemble de paramètres audio propres à un individu,
- un capteur configuré pour capturer un ensemble de paramètres vidéo propres audit individu,
- un processeur recevant les paramètres audio et les paramètres vidéo, ledit processeur étant adapté à exécuter les étapes du procédé selon l'invention et générer au moins une clé de chiffrement ou clé cryptographique.

Le processeur comprend, par exemple, un module adapté à extraire des paramètres cepstraux de l'ensemble des paramètres audio et un module configuré pour réaliser une transformée en cosinus discrète sur les paramètres vidéo

D'autres caractéristiques et avantages de l'invention apparaîtront mieux à la lecture de la description qui suit, d'exemples de réalisation donnés à titre illustratif et nullement limitatif, annexée des figures qui représentent :

[Fig.1], un exemple de système de génération d'une clé privée selon l'invention,

[Fig.2], un exemple d'étapes mises en œuvre par le procédé selon l'invention,

[Fig.3], un exemple d'extraction des paramètres vocaux,

[Fig.4], une succession d'étapes pour extraire des paramètres visuels

La figure 1 illustre un exemple de dispositif 1 permettant la génération d'une clé privée selon l'invention comprenant, par exemple, un capteur audio 2 adapté à capturer une phrase prononcée par un individu, un capteur vidéo 3 configuré pour acquérir, en temps réel par exemple, un flux d'images caractérisant un individu. Le capteur audio 2 et le capteur vidéo 3 sont reliés à un processeur 4 comprenant un logiciel configuré pour exécuter les étapes de génération d'une clé privée à partir de paramètres audio et vidéo propres à l'individu. Le dispositif peut comporter une mémoire 5 permettant le stockage de paramètres lors de l'exécution des étapes, ces données seront effacées en fin de processus.

Le processeur peut comporter un module 6 adapté à extraire des paramètres cepstraux de l'ensemble des paramètres audio et un module 7 configuré pour réaliser une transformée en cosinus discrète sur les paramètres vidéo.

Les paramètres audio et vidéo peuvent être acquis, enregistrés en temps réel ou bien avoir été stockés dans une base de données, le temps d'exécuter les étapes du procédé.

Le procédé de génération d'une clé de chiffrement selon l'invention comporte par exemple les étapes génériques illustrées à la figure 2.

A partir du flux audio acquis par le capteur audio, le processeur va extraire, plusieurs vecteurs caractéristiques 21, appelées vecteurs acoustiques (paramètres vocaux), issus des points d'intérêts de la voix. Les points d'intérêts de la voix sont des paramètres biométriques audio caractérisant la voix d'un individu.

Ces vecteurs acoustiques $V_{ij}$ sont stockés dans une matrice $M_1$ de taille NxM, où N est la taille des vecteurs et M est le nombre des vecteurs extraits.

Lors de l'étape suivante, 22, on utilise un logiciel de tirage aléatoire sur les composantes des vecteurs de la matrice $M_1$, afin d'extraire un ensemble de paramètres $V_{kl}$ des caractéristiques vocales, se présentant sous la forme d'une matrice une colonne V de taille N. La valeur de N est choisie, par exemple, en fonction des caractéristiques du signal de parole échantillonné.

En parallèle, le procédé extrait, 23, les paramètres visuels d'une image issue d'une vidéo acquise par le capteur vidéo 3 et représentant le visage d'un individu. Ces éléments sont mémorisés sous la forme d'un vecteur $F_1$ de taille N caractérisé par des vecteurs caractéristiques visuels $f_{mn}$. Les paramètres visuels représentent des points d'intérêts qui correspondent à la position dans le visage des zones d'intérêts (yeux, nez, bouche, contour, sourcils).

Puis, le procédé va multiplier le vecteur colonne de la matrice V avec le vecteur ligne $F_1$ des caractéristiques visuelles, 24. Le résultat se présente sous la forme d'une matrice carrée A de taille NxN, avec des composantes $A_{mn}$.

La génération d'une matrice A de taille NxN par combinaison matricielle de N paramètres visuels et les N paramètres vocaux permet notamment :

Une sécurisation des données, car un tiers ne peut retrouver facilement les paramètres initiaux visuels et vocaux,

Un caractère aléatoire qui augment l'entropie d'une clé générée à partir de la matrice, d'où un niveau de sécurité augmenté.

En effectuant une binarisation d'un ensemble {Aj} de valeurs de la matrice A choisies d'une façon aléatoire, un vecteur binaire de taille T est généré, 25. La taille T correspond au nombre de bits dans la clé générée, par exemple 510, 1022, 2046. Ensuite, on ajoute au moins deux bits ayant une valeur x= « 1 » au début et à la fin du vecteur binaire, 26. Un bit est ajouté au début (à droite) afin de garantir que le chiffre obtenu est impair et un bit est ajouté à la fin (à gauche) afin de garantir que le chiffre soit plus grand si ce bit est égal à zéro.

La taille finale de vecteur correspond au nombre de bits dans la clé générée, et sera par exemple égale à 512, 1024, ou 2048. Puis, le vecteur binaire B obtenu est converti en nombre K assez grand, le nombre de chiffres choisi pour K est notamment fonction de la sécurité requise pour l'application. K est la représentation décimale du vecteur binaire.

Par exemple, pour un vecteur binaire de taille 512 bits, K est un nombre décimal avec 155 chiffres, pour 1024 bits K contient 309 chiffres et pour 2048 bits K contient 617 chiffres.

On vérifie si ce nombre K est un nombre premier, 27. Si le résultat du test indique que le nombre K n'est pas premier, on ajoute un nombre y= « 2 », par exemple, au nombre K pour obtenir le nombre impair suivant et on recommence l'opération d'ajout du nombre « 2 ». Ceci est répété un nombre de fois suffisant pour trouver un nombre premier $K_p$. La vérification peut se faire en utilisant le test de Miller-Rabin connu de l'homme du métier.

Les opérations sont répétées un nombre de fois suffisant pour trouver au moins deux grands nombres premiers $GP_1$, $GP_2$ d'au moins 1024 bits soit environ 308 chiffres.

A partir des deux grands nombres premiers $GP_1$, $GP_2$ et en utilisant un algorithme de type RSA, il sera possible de trouver une clé privée et une clé publique $K_{p1}$, $K_{p2}$.

Les valeurs x=1 et y=2 sont données à titre illustratif. La valeur de x est choisie de façon à obtenir un premier nombre premier et la valeur de y peut être égale à 2, 4, ou tout nombre pair qui permettra d'obtenir un nombre impair suivant.

Après la génération des clés, les informations éventuellement contenues dans la mémoire sont supprimées par le procédé.

Il existe, dans la littérature, plusieurs types de vecteurs acoustiques. Les vecteurs acoustiques les plus utilisés dans le traitement de parole sont basés sur les coefficients cepstraux connus sous l'abréviation anglo-saxonne « MFCCs » (Mel-Frequency Cepstral Coefficients). Ces coefficients prennent en compte les propriétés du système auditif humain. La figure 3 illustre un exemple d'étapes exécutées par le processeur sur le flux audio, signal de parole par exemple, enregistré ou capté, par exemple :

- 30 - Le signal de parole est découpé en segments de tailles fixes (entre 20 et 50 ms),
- 31 - Chaque segment est pondéré par une fenêtre de Hamming,
- 32 - Une transformée de Fourrier rapide est appliquée à chaque segment,
- 33 - Un filtrage de type MEL est réalisé sur les segments transformés (Le filtre de MEL est un banc de filtres triangulaires qui se chevauchent et qui modélisent l'appareil auditif humain).
- La fonction de Mel s'exprime en fonction de la fréquence par :

$$M(f) = 2595 log_{10}\left(1 + \frac{f}{700}\right)$$

- La réponse de chacun des filtres est illustrée par :
  -

$$Y(l) = \sum_{k=0}^{\frac{N}{2}} X(f)\, M_l(f)$$

où 1=1, 2, ....,M, X(f) est le spectre du signal de parole, et $M_l(f)$ la fonction de transfert du filtre,

- 34 - A la sortie de chaque filtre le logarithme du module (ou l'amplitude) de signal filtré est conservé,

- 35 - Puis l'étape suivante consiste à appliquer une transformation en cosinus discrète sur le logarithme du module pour obtenir les coefficients MFCC. Pendant cette étape le nombre des vecteurs cepstraux MFCCs par segment est défini :
  -

$$MFCC(i) = \sqrt{\frac{2}{L}} \sum_{m=1}^{L} log\left(|Y(m)| cos\left(\frac{\pi i}{L}(m - 0.5)\right)\right)$$

où L est le nombre de filtres de Mel et i l'indice du coefficient MFCC.

Par exemple, pour un signal de parole durant deux secondes, une taille de segment de 20 ms, un nombre de MFCCs par segment égal à N=30, on obtient M=200 vecteurs caractéristiques de taille 30.

Comme pour la parole, il existe plusieurs types de paramètres visuels. L'une des techniques classiques pour extraire les paramètres visuels est la transformée en cosinus discrète (Discrete Cosine Transform - DCT). Cette technique est très utilisée dans le domaine de compression d'image.

La figure 4 illustre les étapes majeures. Une fois la zone d'intérêt déterminée, la technique DCT est appliquée sur l'intensité des pixels contenus dans cette zone. Le résultat de cette opération est une matrice DCT, 41. A partir de cette matrice le vecteur caractéristique visuel de taille N est extrait selon le principe du « zig-zag », 42.

Le procédé selon l'invention permet la génération de clés cryptographiques pouvant être utilisées dans les domaines techniques suivants :

La sécurisation des données d'identité, dans des systèmes d'identification,

La sécurisation de données sensibles à stocker sur un terminal mobile,

La sécurisation des échanges entre un terminal mobile et un équipement/serveur applicatif,

La signature électronique de données depuis un terminal mobile pour la vérification d'authenticité.

Le procédé et le dispositif selon l'invention présentent notamment l'avantage de générer une clé privée à partir d'informations biométriques propres à un individu, sans faire intervenir de paramètres externes en fonctionnement normal. Les données biométriques utilisées pour générer les nombres premiers sont immédiatement supprimées après l'opération. L'invention offre une sécurité importante. La variabilité intra-locuteur, i.e., une personne ne peut pas prononcer la même phrase deux fois de la même façon, et intra-visage garantit que les données brutes (parole et visage) ne peuvent être reproduites. Si un tiers otient un enregistrement des données originales, les caractéristiques vocales et visuelles seront différentes des caractéristiques des données originales. Dans l'hypothèse d'un piratage des données d'origines, déterminer les nombres premiers par un tiers non autorisé reste difficile du fait du caractère aléatoire dans le choix des caractéristiques vocales et visuelles, leurs configurations, le choix de vecteur colonne pour la parole, la binarisation.

## Revendications

1. Procédé pour générer une ou plusieurs clés de chiffrement **caractérisé en ce qu'**il comporte au moins les étapes suivantes :

    - extraire (21) un ensemble de paramètres vocaux d'un flux audio propre à un individu et sélectionner un nombre N de paramètres vocaux par tirage aléatoire (22),
    - extraire (23) un ensemble de N paramètres visuels d'une image d'un flux vidéo,
    - combiner (24) les N paramètres visuels et les N paramètres vocaux et générer une matrice A de taille NxN,
    - effectuer (25) une binarisation d'un ensemble de composantes de la matrice A afin de générer un vecteur binaire de taille T,
    - ajouter au moins deux bits de valeur x au début et à la fin du vecteur binaire afin d'obtenir un nombre impair,
    - convertir le vecteur en nombre, vérifier si le nombre est un nombre premier, (27),
    - si le nombre n'est pas un nombre premier, ajouter un nombre « y » afin d'obtenir le nombre impair suivant,
    - réitérer les étapes d'ajout de la valeur « y » jusqu'à obtenir un nombre premier, (28),
    - à partir d'au moins ledit nombre premier trouvé, générer au moins une clé de chiffrement Kp.

2. Procédé selon la revendication 1 **caractérisé en ce que** l'on génère au moins deux nombres premiers pour générer un couple clé publique/clé privée $K_{P1}$, $K_{P2}$, pour des usages de chiffrement asymétrique.

3. Procédé selon l'une des revendications 1 ou 2 **caractérisé en ce que** l'on utilise le test Miller-Rabin pour vérifier que le nombre est un nombre premier.

4. Procédé selon l'une des revendications 1 à 3 **caractérisé en ce que** l'on ajoute les valeurs x=1 et y=2.

5. Procédé selon l'une des revendications 1 à 4 **caractérisé en ce que** l'on utilise comme paramètres vocaux des coefficients cepstraux.

6. Procédé selon la revendication 5 **caractérisé en ce que** l'on extrait un ensemble de paramètres vocaux en exécutant les étapes suivantes :

- découper le signal de parole en plusieurs segments et pondérer chaque segment par une fenêtre de Hamming, (31),
- appliquer une transformée de Fourrier rapide à chaque segment pondéré (32),
- filtrer (33) les segments transformés,
- appliquer une transformation en cosinus discrète pour obtenir les coefficients cepstraux MFCC (35).

**7.** Procédé selon l'une des revendications 1 à 5 **caractérisé en ce que** l'on utilise comme paramètres visuels des paramètres issus de la technique de transformée en cosinus discrète.

**8.** Dispositif pour générer une ou plusieurs clés de chiffrement **caractérisé en ce qu'**il comporte au moins les éléments suivants :

- un capteur (2) adapté à capturer un ensemble de paramètres audio propres à un individu,
- un capteur (3) configuré pour capturer un ensemble de paramètres vidéo propres audit individu,
- un processeur (4) recevant les paramètres audio et les paramètres vidéo, ledit processeur étant adapté à exécuter les étapes du procédé selon l'une des revendications 1 à 7 et générer au moins une clé de chiffrement

**9.** Dispositif selon la revendication 8 **caractérisé en ce que** le processeur (4) comprend un module adapté à extraire des paramètres cepstraux de l'ensemble des paramètres audio et un module configuré pour réaliser une transformée en cosinus discrète sur les paramètres vidéo.

[Fig. 1]

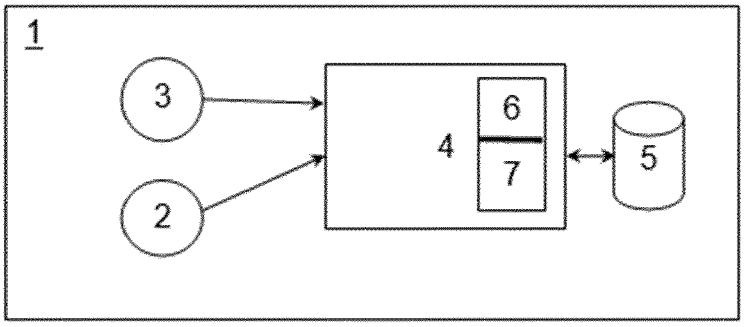
1
3
2
4
6
7
5

[Fig. 2]

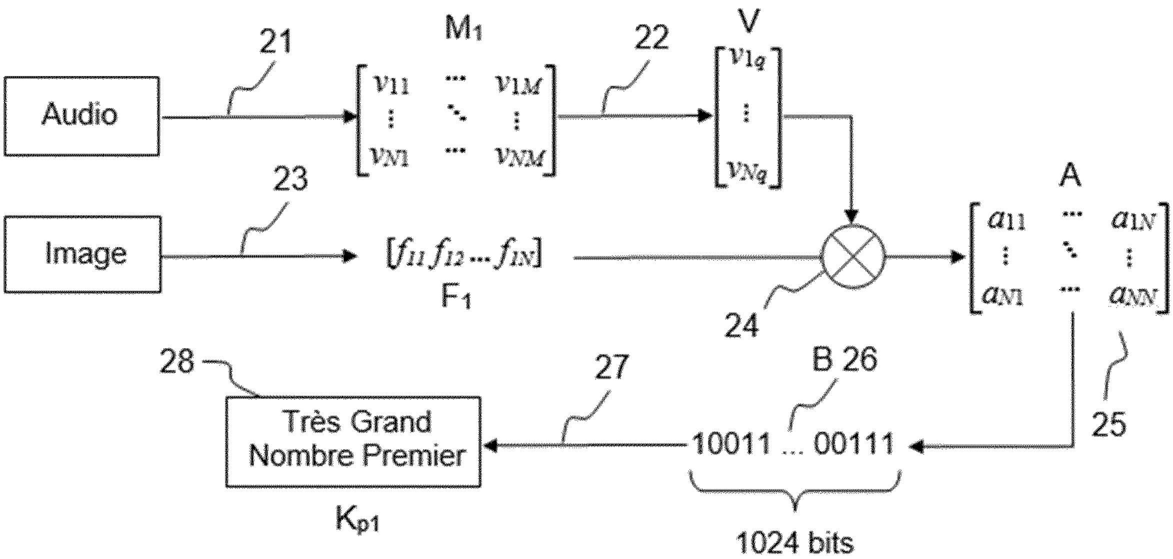
Audio
21
M1
v11 ... v1M
vN1 ... vNM
22
V
v1q
vNq
Image
23
[f11 f12 ... f1N]
F1
24
A
a11 ... a1N
aN1 ... aNN
25
28
Très Grand
Nombre Premier
Kp1
27
B 26
10011 ... 00111
1024 bits

[Fig. 3]

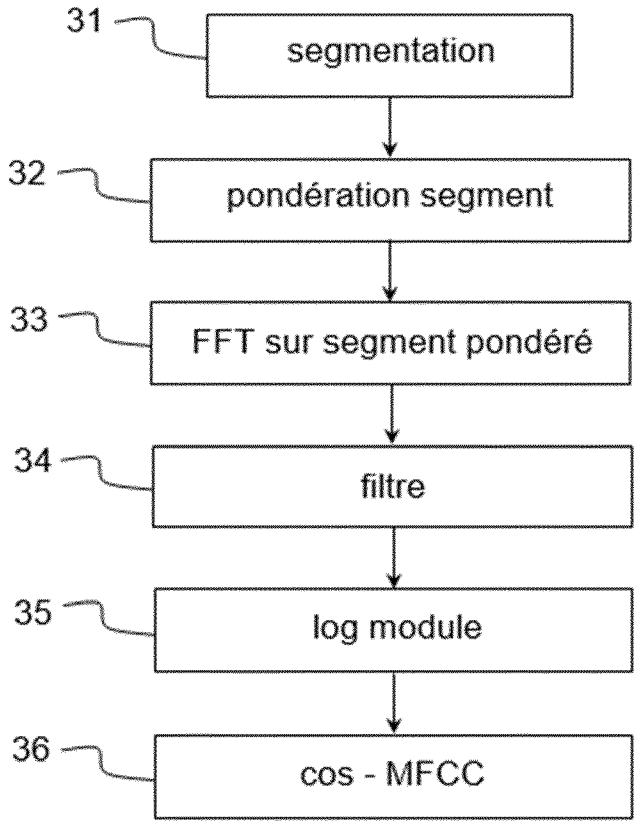
31
segmentation
32
pondération segment
33
FFT sur segment pondéré
34
filtre
35
log module
36
cos - MFCC

[Fig. 4]

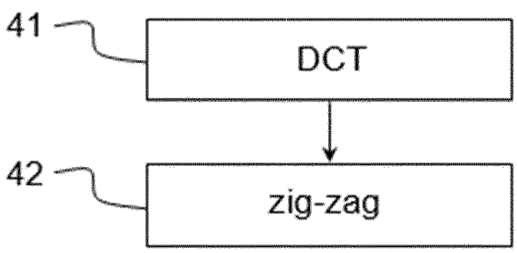
41
DCT
42
zig-zag

Europäisches Patentamt
European Patent Office
Office européen des brevets

## RAPPORT DE RECHERCHE EUROPEENNE

Numéro de la demande
EP 20 18 4981

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Mofeed Turky Rashid ET AL: "RSA Cryptographic Key Generation Using Fingerprint Minutiae", , 1 janvier 2014 (2014-01-01), page 66, XP055673658, Iraqi Journal for Computers and Informatics RSA Cryptographic Key Generation Using Fingerprint Minutiae Extrait de l'Internet: URL:http://www.iqijci.org/ijci/issues/issue1/(13)RSA%20Cryptographic%20Key%20Generation%20Using%20Fingerprint%20Minut.pdf [extrait le 2020-03-04] * abrégé * * section 3 * | 1-9 | INV. H04L9/08 H04L9/30 |
| X | SARKAR ARPITA ET AL: "RSA Key Generation from Cancelable Fingerprint Biometrics", 2017 INTERNATIONAL CONFERENCE ON COMPUTING, COMMUNICATION, CONTROL AND AUTOMATION (ICCUBEA), IEEE, 17 août 2017 (2017-08-17), pages 1-6, XP033402710, DOI: 10.1109/ICCUBEA.2017.8463959 * abrégé * * section III * | 1-9 | |
| A | CN 207 150 607 U (WUHAN ZHENYUAN BIOLOGICAL DATA CO LTD) 27 mars 2018 (2018-03-27) * alinéa [0019] * * alinéa [0020] * * alinéa [0021] * * alinéa [0022] * * alinéa [0023] * * alinéa [0024] * | 1-9 | |
| | -/-- | | |

DOMAINES TECHNIQUES RECHERCHES (IPC)

H04L

Le présent rapport a été établi pour toutes les revendications

1

| Lieu de la recherche | Date d'achèvement de la recherche | Examinateur |
|---|---|---|
| Munich | 30 octobre 2020 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches Patentamt
European Patent Office
Office européen des brevets

# RAPPORT DE RECHERCHE EUROPEENNE

Numéro de la demande
EP 20 18 4981

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 103 873 254 A (UNIV HANGZHOU DIANZI) 18 juin 2014 (2014-06-18)<br>* le document en entier *<br>----- | 1-9 | |

DOMAINES TECHNIQUES RECHERCHES (IPC)

Le présent rapport a été établi pour toutes les revendications

1

| Lieu de la recherche | Date d'achèvement de la recherche | Examinateur |
|---|---|---|
| Munich | 30 octobre 2020 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

page 2 de 2

# ANNEXE AU RAPPORT DE RECHERCHE EUROPEENNE RELATIF A LA DEMANDE DE BREVET EUROPEEN NO.

EP 20 18 4981

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2020

| Document brevet cité au rapport de recherche | Date de publication | Membre(s) de la famille de brevet(s) | Date de publication |
|---|---|---|---|
| CN 207150607 U | 27-03-2018 | AUCUN | |
| CN 103873254 A | 18-06-2014 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 10050784 B

### Littérature non-brevet citée dans la description

- **MOFEED TURKY RASHID et al.** *RSA Cryptographic Key Generation Using Fingerprint Minutia*
- **SARKAR ARPITA et al.** RSA Key Generation from Cancelable Fingerprint Biometrics, 2017 International Conférence on computing, communication, control and automation. IEEE